# EUROPEAN PATENT SPECIFICATION

(11) **EP 1 601 212 B1**
(45) Date of publication and mention of the grant of the patent: **04.03.2009**
(21) Application number: 05253225.6
(22) Date of filing: 25.05.2005
(51) Int. Cl.: H04W 4/08

(54) **Apparatus and method for modifying the sender identifier in an SMS message**
Vorrichtung und Verfahren zur Modifizierung der Absenderkennzeichnung in einer SMS Nachricht.
Dispositif et procédé pour modifier l' identificateur de l'expéditeur dans un message court (SMS).

(30) Priority: 25.05.2004 GB 0411663
(43) Date of publication of application: 30.11.2005
(73) Proprietor: INTELLPROP LIMITED, Warsash Hampshire SO31 9HN (GB)
(72) Inventor: Wilson, Jeffrey, Fareham, Hampshire PO16 7OH (GB)
(74) Representative: Robinson, Nigel Alexander Julian

(56) References cited:
- WO-A-01/82575
- WO-A-03/036906
- AT-U1- 5 954
- US-A1- 2003 084 103

## Description

This invention relates to telecommunications services apparatus and methods for use with a telecommunications system, such as a mobile telephone system, and in particular to the field of messaging services.

Messaging on mobile networks, and in particular text messaging, has grown significantly since its introduction. It is foreseen that in the future, advanced services will continue to fuel this growth as users find that the mobile terminal becomes increasingly useful for a variety of aspects of communication and information retrieval.

Currently, the predominant usage of messaging services on mobile networks is for person to person text messaging, which in the case of GSM networks is supported by the Short Message Service (SMS). Comparable messaging technologies exist for other mobile network architectures, and next generation messaging systems for GSM (Enhanced Messaging Services EMS, and Multimedia Messaging Services MMS) are being introduced, and collectively these are hereon referred to as text messaging services.

SMS is specified as two distinct tele-services, known as Mobile Originated (MO) and Mobile Terminated (MT). These are distinct and have different message formats. It is not possible for an MO message from a handset to be delivered unmodified to a receiving handset, without first passing through an equipment that can perform the modification to MT format. Furthermore the characteristics of an MT message allow for the possibility of an alphanumeric CLI (calling line identity), while an MO message does not support an alphanumeric CLI.

Some value-added text messaging services may require a user to send a text message to a specified number or short code, causing the network to process the message according to the service specified by the number. This might be for example to process the message in some way, possibly transforming certain aspects of its addressing or content, before onward delivering it to its destination. Alternatively for some applications the network may direct the transformed message back to the originating user. This latter case is dealt with in International Patent Application PCT WO 2004/019633.

Other uses of text messaging services include person to host, and host to person, where a host is a network equipment or third party equipment designed to source and/or sink text messages. Hosts typically provide message collection facilities for voting events, competitions or information services and/or message source facilities for subscription services or advertising.

It is common for SMS hosts to have the capability to specify an alphanumeric CLI for host-originated traffic, such that when messages are delivered to the handsets of recipients, the message is displayed as originating from a name rather than just a normal numeric MSISDN CLI. This feature is commonly used for advertising or promotional purposes. Alphanumeric CLIs are also commonly used for network-generated messages such as voice-mail alerts.

It is not possible in current GSM networks for users to be able to specify an alphanumeric CLI when originating messages from their handsets; this feature is restricted to hosts. One of the reasons for this is that the CLI field for the mobile originated path between handset and SMSC (short message service centre) in GSM is filled in using information from the VLR (visitor location register) and is constrained to be numeric, whereas the mobile terminated paths from host-to-SMSC and SMSC-to-destination handset use a different message format that also supports an alphanumeric CLI.

Furthermore, in present networks it is not possible for a user to reply to a message received with an alphanumeric CLI. If this is attempted, then the alphanumeric string is automatically used as the destination address for the reply, and the network is unable to translate this into a deliverable address. This situation is discussed in International Patent Application PCT WO 03/036906.

WO 03/036906 discloses a telephone system, in particular a mobile phone system capable of handling text message. Destination address signals for telephone communication may be in one of first and second signal formats such as dialled numeric signals and alphanumeric signals. An SMS Router can distinguish between the numeric and alphanumeric signals, and directs numeric destination address signals to a short message service centre SMSC. The alphanumeric destination address signals may instead be re-routed on the basis of stored information, such as in a database, for example directly to an SMS Host. Alternatively, the alphanumeric address signals can be converted by the SMS Router to numeric signals on the basis of the stored information and then directed to the SMSC. Thus WO 03/036906 is concerned with alphanumeric destination addresses, which are converted to MSISDN addresses to enable a message to be delivered to the destination.

AT 005 954 uI (a Gebrauchsmuster) proposes a short message service (SMS) in which users can use "nicknames" or "aliases" as alphanumeric destination addresses. A user registers his or her alias with a central service number. The central service links the alias to the user's mobile number using a database in a server. After the alias is registered, the user sends and receives SMS messages via the central service number.

A message sent by a first user to a second user identified by the second user's alias is received by the central service. The central service determines the mobile number of the second user from the alias and delivers the message with the first user's alias as the identity of the sender.

The present invention addresses the problem of users not being able to specify alphanumeric CLIs on messages that originate from their mobile handsets. The ability to present an originating name that can be selected spontaneously and used to convey emotion, humour, fun etc. adds a new dimension to the already enormously popular text messaging service. Embodiments of the invention open up this possibility to the huge installed base of existing text-message capable handsets that are in service.

According to one aspect of the invention there is provided telecommunications services apparatus for use with a telecommunications network supporting text messaging, the apparatus comprising detection means operable to detect, in a received mobile originated text message from a first user, an indicator in at least one variable field of the mobile originated text message, and means responsive to detection of the indicator by said detection means to replace a numeric calling line identifier of the mobile originated text message with an alphanumeric calling line identifier (CLI) specified by the first user in the mobile terminated message corresponding to the mobile originated text message to be delivered to a second user

According to another aspect of the invention there is provided a telecommunications services method for use with a telecommunications network supporting text messaging, the method comprising detecting, in a received mobile originated text message from a first user, an indicator in at least one variable field of the mobile originated text message, and in response to detection of the indicator replacing a numeric calling line identifier of the mobile originated text message with an alphanumeric CLI specified by the first user in the mobile terminated message corresponding to the mobile originated text message to be delivered to a second user.

According to a further aspect of the invention there is provided a telecommunications services apparatus for use with a telecommunications network, wherein the apparatus is operable to receive in a text message from a first user, an indicator in the destination number field, message body field or other variable field of a mobile originated text message, or in a combination of said fields, receipt of said indicator causing the apparatus to place an alphanumeric CLI in the mobile terminated message intended for delivery to a second user.

According to a yet another aspect of the invention, the apparatus is operable to receive a mobile originated text message reply from said second user wherein the destination address in the reply is alphanumeric, and to deliver the reply to the first user.

According to a further aspect of the invention, the apparatus is further operable to allow said reply also to be sent with an alphanumeric CLI.

According to a still further aspect of the invention, the apparatus is further operable to allow a first user to pre-set, by means of a text message, USSD message, interactive voice call or other communication, an alphanumeric CLI alias to be attached to a selected future message from the first user intended for a second user, the apparatus being operable to select said message, based on an indicator in the destination number field, message body field or other variable field of a mobile originated text message, or in a combination of said fields, from those messages subsequently sent by the first user and to substitute the pre-set alphanumeric alias for the first user's numeric CLI in the selected text message delivered to the second user.

According to a further aspect of the invention, the apparatus is further operable to allow a first user to pre-set more than one alphanumeric CLI alias, and to specify which one is to be used by means of an indicator in a subsequent message transmission.

According to a further aspect of the invention, the apparatus is further operable to store on behalf of a second user an association between telephone number of a first user and an alphanumeric alias for said first user previously chosen by the first user, and on receipt of a selected text message addressed to the second user from the first user, to substitute the alphanumeric alias for the first user's numeric CLI in the text message delivered to the second user.

Preferably the alphanumeric CLI that is substituted is selectable by the sender, and may be carried as part of said indicator.

The indicator may be in the destination number field of the text message, or in the message body field. Alternatively, the indicator may have parts in different ones of the variable fields, such as the destination number field and the message body field.

Preferably, a reply to a message with an alphanumeric CLI may also carry an indicator, allowing a dialogue to take place between two or more users, each sender being able to independently select the alphanumeric CLI that is presented to the recipient of each of the sender's transmissions.

Other aspects of the invention include a computer program having computer executable instructions which, when loaded on to a computer, is operable to cause the computer to perform the above method, and a computer program product comprising a computer readable medium having recorded thereon information signals representative of the computer program.

The invention will now be described by way of example with reference to the accompanying drawings. Figure 1 which shows a telecommunications services apparatus according to one embodiment of the invention. Figures 2A and 2B show a new message indicator and sender CLI and a message body in accordance with an embodiment of the invention. Figures 3A and 3B show another new message indicator and sender CLI and another message body in, accordance with an embodiment of the invention.

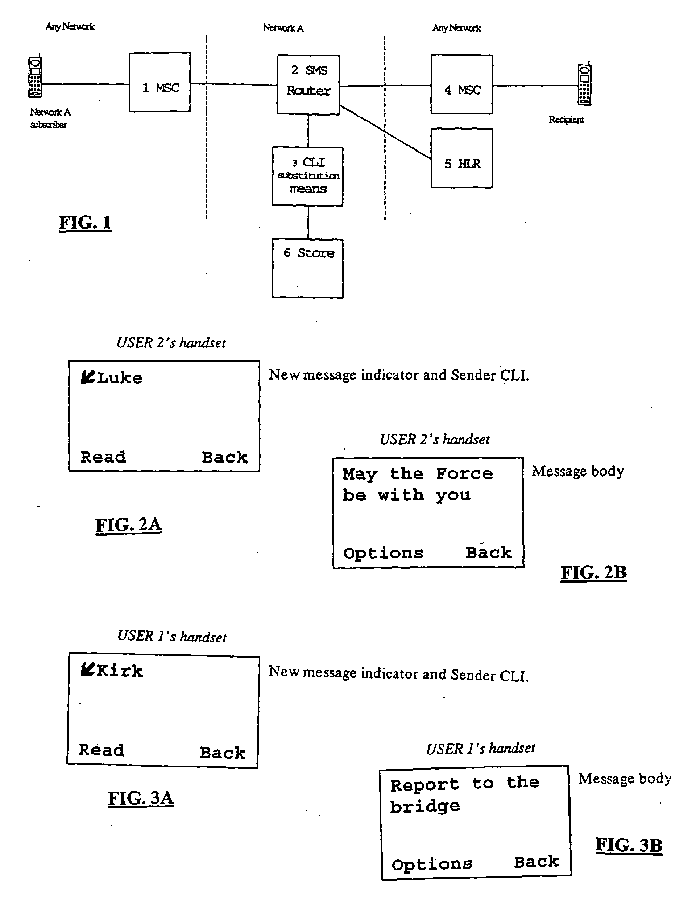

Referring to Figure 1, users (in Any Network) are connected to a mobile telephone network (Network A) either directly (`on-net') or indirectly whilst roaming (`off net') and are able to send mobile originated text messages via a mobile switching centre (MSC) 1. The MSC 1 passes the message to an SMS router 2 in Network A, which is able to examine message characteristics. The SMS router 2 may, for example, be one manufactured by Telsis Limited. Dependent upon characteristics of the message the SMS router 2 is operable to identify and select certain messages. These selected messages may have their numeric CLI modified by a CLI substitution means 3, and the original numeric CLI and the modified alphanumeric CLIs may be stored in a CLI association store 6, which may be either fully or partly internal or external to the substitution means 3. The apparatus is further operable to transmit the messages to recipients either directly via an MSC 4 or indirectly via an SMSC (not shown). An HLR (home location register) 5 is queried to determine the recipient's location. An SMSC may also be used as a fallback in the event of failure to deliver directly, or alternatively the SMS router 2 may incorporate a retry capability, which may ease integration with billing systems.

Present technology does not allow the sender of a mobile originated text message from a handset to use an alphanumeric CLI. This technique allows the user to add information into either the destination number or the message body (though other methods are possible) in the mobile terminated path to overcome this limitation. The technique also allows replies to be handled from recipients on the same network as the original sender, and in further developments from any co-operating network. The SMS routers are preferably used to process the messages and to determine those messages that have the additional alphanumeric specification information attached.

The present technique allows a text message sender (User 1) to specify an alphanumeric CLI (of up to 11 characters in the case of SMS) for display on the recipient's terminal (User 2) in place of either a numeric CLI or a name substituted from the recipient's phone book.

In a preferred embodiment User 1 may specify such a message by composing the message body according to a predefined syntax that is recognised by the SMS router and marks the message as an alpha message. A preferred syntax includes a field that specifies the desired alphanumeric string to be used as the alphanumeric CLI, and a delimiter to separate the string from the remainder of the message. Preferably the string is specified to be at the start of the message, and the delimiter comprises a prefixed * and a postfixed # around the string. For example the message:
***Luke#May the Force be with you**
would be received by User 2 with the alphanumeric CLI alias 'Luke', and might be displayed on the User 2's phone as shown in Figure 2A, and upon opening the message as shown in Figure 2B.

Other syntaxes are possible.

If the string between the * and # is missing, then preferred behaviour is to treat the message as a normal, non-alphanumeric, text message.

In the preferred embodiment, the apparatus comprises one or more SMS routers 2 and the CLI substitution means 3 with the store 6. The store 6 is operable to store for User 2 a list of associations between User 1's numeric CLIs and alphanumeric CLI aliases, and the date and time that each alias last occurred. There may be a limit on the maximum number stored, and in a preferred embodiment this is set to 100, with entries being expired after a fixed time period, preferably 24 hours. If the limit is exceeded, then preferred behaviour is to negatively acknowledge the message submission back to the sender's handset, resulting in 'Message not sent' or similar.

If a different User 1 tries to use the same alphanumeric CLI alias towards User 2 that another sender has already used, prior to the expiry of the prior use, then the later attempt preferably fails, and the message is negatively acknowledged.

In the example above the table for User 2 now contains an entry of the form:

| | | |
|---|---|---|
| Luke | 07123123123 | 126 May 2004 11:35:10 |

If User 2 is on the same network as the sender User 1 (i.e. on-net), or on a co-operating network, then any reply that he makes to User 1 will also pass through the apparatus. The handset MMI's reply function automatically transposes any received CLI into the destination number field. The apparatus is operable to detect that the message has an alphanumeric destination number, this being one of the message characteristics that it checks. The apparatus checks User 2's table to see if the alpha destination number in his reply matches any entry. In this case it finds a match, and obtains the MSISDN of User 1 who called himself Luke, enabling the SMS router 2 to deliver the message using a numeric destination number.

However, processing is symmetrical, so that if the message body in User 2's reply is in the form
***<alphaCLI>#<message body>**
then the process is repeated, whereby an entry is added to User 1's table and the message is delivered with <alphaCLI> substituted for User 2's numeric MSISDN CLI. For example, User 2 may reply as follows:
***Kirk#Report to the bridge**

The reply will automatically be sent to the alphanumeric address 'Luke'. After CLI substitution this will be received by User 1 as shown in Figure 3A, and upon opening the message as shown in Figure 3B.

The key principle underlying this technique is that for each message transmission from a User 1 to a User 2, where User 1 specifies a new alphanumeric CLI, information is stored in a table associated with User 2. This table holds associations that are personal to User 2, and permits replies to be made to User 1. If the same alphanumeric CLI is reused, then a new table entry is not created, unless the previous corresponding entry has expired.

Whenever a User 2 replies to a message that arrived with an alphanumeric CLI, the new destination address will automatically be alphanumeric, and this address is looked up in the table associated with User 2, in order to find User 1's MSISDN for message delivery. It is for this reason that, in a preferred embodiment that allows replies as described, the list of alphanumeric CLIs in User 2's table must be unique, otherwise there would be ambiguity regarding to whom a reply should be directed.

If User 2's reply also specifies an alphanumeric CLI, then corresponding operations occur with a table that is personal to User 1. For example, if User 1 and User 2 are sending messages back and forth between each other, respectively using the alphanumeric CLI aliases 'Luke' and 'Kirk', then the respective tables will contain:

**User 2's table**

| | | |
|---|---|---|
| Luke | 07123123123 | 26 May 2004 11:35:10 |

**User 1'stable**

| | | |
|---|---|---|
| Kirk | 07001123456 | 26 May 2004 11:35:30 |

Each user has the other's alphanumeric alias in their own personal table, so that when each replies, which automatically uses an alphanumeric destination address, the apparatus can resolve the correct destination MSISDN for the reply. Each time User 1 uses a different alphanumeric CLI alias, a new entry is created in the recipient's table, thereby allowing a reply.

As an alternative or complementary embodiment, the sender may be permitted to preset one or more alphanumeric CLIs that he wishes to use for one or more messages. A preferred syntax is for the user to send the desired alpha alias to a destination number comprising his own MSISDN postfixed with a character such as # or *. The GSM specifications define a subaddress field as a postfix to a destination address that commences with a #, so this scheme should be supported. Different subaddresses may then be used to indicate which default alphanumeric CLI alias is to be set or used, in the case where more than one default alias is desired. The SMS router recognises all messages that have, for example, a sub address or a postfixed *, on the destination number. If the sender's numeric CLI and the destination number (without the subaddress or *) match, then the user's default alphanumeric CLI alias is set up using the contents of the text message body. If the body is more than 11 characters, then preferably the first 11 characters only are used. If the CLI is less than 11 characters, then preferably the name is padded out to 11 characters with spaces. Furthermore, if the sender's numeric CLI and the destination number (without the subaddress or *) do not match then the message is sent on to the destination with the default alphanumeric CLI substituted for the original numeric CLI. Other syntaxes are possible.

Example of setting up a pre-set alphanumeric CLI:

A user whose MSISDN is 07001 123456 sends the message
**Front Desk**
to the number 07001 123456*, which is own number followed by *.

He optionally receives a confirmation text message indicating that his default alphanumeric CLI is now set to 'Front Desk'. From this point on, if this user sends a text message to a recipient and appends a * to the destination number, his numeric CLI with be replaced with 'Front Desk'.

There are several possible ways for User 2 to respond to a message from User 1 with an alphanumeric CLI, where User1 and User 2 are on the same network, or on co-operating networks:
1. Normal reply. The destination number will contain User 1's alphanumeric CLI alias, and the SMS router will convert this back to a number for delivery.
2. Reply using alphanumeric specification syntax ***<alphaCLI>#<message body>.** The destination number will contain User 1's alphanumeric CLI alias. The SMS router will convert this back to a number for delivery, and substitute <alphaCLI> for User 2's numeric CLI.
3. Initiate a new message to a destination number comprising User 1's MSISDN followed by *. This method will use a preset alias for user 2's alphanumeric CLI.
4. Initiate a new message to User 1's MSISDN, the message body containing the alphanumeric specification syntax ***<alphaCLI>#<message body>.** The SMS router will substitute <alphaCLI> for User 2's numeric CLI.

There are a number of enhancements to the basic ideas so far described:

It may be desirable for the apparatus to include a list of words or strings that are barred from use as alphanumeric CLIs, either because they are brand names, trade marks, offensive words, or otherwise reserved. It may be desirable to prevent users from impersonating organisations or well-known people for example. For the prevention of impersonation, it may be desirable to restrict the alphanumeric strings that are used as CLIs to 10 characters, and to prefix any alphanumeric CLI with a special character such as @, so that the alphanumeric CLI cannot be confused with a phone book entry, or network-generated alphanumeric CLI.

If the requested alias is too long, e.g. more than 10 or 11 characters depending on implementation, then the message may either be negatively acknowledged, or the alias could be truncated. A warning text message back to the sender could be an option in this case.

If User 2 finds that a User 1 has taken an alias that he would like to free up for any reason and redefine for someone else to use, then a protocol may be provided whereby User 2 can send a text message, for example, to himself with a specified syntax, to overwrite the entry in his table.

Since the entries in User 2's association table preferably expire after a period, it may also be desirable to give User 2 the option of setting up some permanent entries in his table. These entries would effectively act as a blacklist of aliases that are not available for any User 1's to use except those whose CLIs match the entries in the table. A preferred syntax for a User 2 to set up a permanent entry in his CLI table is for User 2 to send a text message of the form
<alphaCLI> = <MSISDN number>
to a destination address comprising his own MSISDN followed by *.

For example, he could send
Luke=07700333444 to the address 07001123456*
to enforce the permanent association between the alphanumeric CLI 'Luke' and the address 07700333444. Only a caller with the CLI 07700333444 would then be able to present the alphanumeric CLI 'Luke'.

Integration with a network address book would also be desirable to allow User 2's phone book entries to contribute to the black list of aliases unavailable for other users to use.

To allow the technique to work off-net, i.e. with subscribers of another co-operating network, it is simply necessary for both networks to have the apparatus installed, and for one apparatus to query the other when a message is passing between these two networks. In other respects the principle of the technique is identical.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. Telecommunications services apparatus for use with a telecommunications network supporting text messaging, the apparatus comprising detection means (2) operable to detect, in a received mobile originated text message from a first user, an indicator in at least one variable field of the mobile originated text message, and means (2; 3; 6) operable to replace responsive to detection of the indicator by said detection means, a numeric calling line identifier of the mobile originated text message with an alphanumeric calling line identifier specified by the first user in the mobile terminated message corresponding to the mobile originated text message to be delivered to a second user.

2. Apparatus according to claim 1, wherein the indicator is detected in a destination number field of the received mobile originated text message.

3. Apparatus according to claim 1 or claim 2, wherein the indicator is detected in a message body field of the received mobile originated text message.

4. Apparatus according to claim 1, claim 2 or claim 3, wherein at least part of the indicator is detected in more than one variable field.

5. Apparatus according to any one of claims 1 to 4, comprising means (2, 3, 6) operable to receive a mobile originated text message reply from the second user wherein the destination address in the text message reply is alphanumeric, and to deliver the text message reply to the first user.

6. Apparatus according to claim 5, operable to allow the text message reply to be sent with an alphanumeric calling line identifier.

7. Apparatus according to any one of claims 1 to 6, comprising pre-setting means operable to allow the first user to pre-set the alphanumeric calling line identifier to be included in a selected subsequent text message from the first user addressed to the second user, and wherein the means (2; 3; 6) responsive to detection of the indicator comprises selecting means operable to select a received mobile originated text message based on the indicator in the mobile originated text message from messages sent by the first user subsequently to the first user pre-setting the alphanumeric calling line identity, and to substitute the pre-set alphanumeric calling line identifier for the numeric calling line identifier of the first user in the selected text message to be delivered to the second user.

8. Apparatus according to claim 7, wherein the pre-setting means is operable to pre-set the alphanumeric calling line identifier on the basis of a received communication.

9. Apparatus according to claim 8, wherein the received communication is a text message, a USSD message or an interactive voice call.

10. Apparatus according to claim 7, claim 8 or claim 9, wherein the pre-seating means is configured to allow the first user to pre-set more than one alphanumeric calling line identifier, and to specify which alphanumeric calling line identifier is to be used on the basis of an indicator in a subsequent text message.

11. Apparatus according to any one of claims 1 to 10, comprising storage means (6) operable to store an association between a telephone number of the first user and a previously-selected alphanumeric calling line identifier of the first user and, on receipt of a selected text message addressed to the second user from the first user, to substitute the alphanumeric calling line identifier for the numeric calling line identifier of the first user in the text message delivered to the second user.

12. Apparatus according to any one of claims 1 to 11, wherein the alphanumeric CLI to be included is selectable by the message sender.

13. Apparatus according to claim 12, wherein the alphanumeric calling line identifier to be included is carried by the indicator.

14. Apparatus according to any one of claims 1 to 13, wherein a reply to a text message with an alphanumeric calling line identifier also carries an indicator.

15. A telecommunications services method for use with a telecommunications network supporting text messaging, the method comprising detecting, in a received mobile originated text message from a first user, an indicator in at least one variable field of the mobile originated text message, and in response to detection of the indicator, replacing a numeric calling line identifier of the mobile originated text message with an alphanumeric calling line identifier specified by the user in the mobile terminated message corresponding to the mobile originated text message to be delivered to a second user.

16. A method according to claim 15, wherein the indicator is detected in a destination number field of the received mobile originated text message.

17. A method according to claim 15 or claim 16, wherein the indicator is detected in a message body field of the received mobile originated text message.

18. A method according to claim 15, claim 16 or claim 17, wherein the indicator is detected in more than one variable field.

19. A method according to any one of claims 15 to 18, including receiving a mobile originated text message reply from the second user wherein the destination address in the text message reply is alphanumeric, and delivering the text message reply to the first user.

20. A method according to claim 19, wherein the text message reply sent with an alphanumeric calling line identifier.

21. A method according to any one of claims 15 to 20, including allowing the first user to pre-set the alphanumeric calling line identifier to be included in a selected subsequent text message from the first user intended for the second user, and selecting a received mobile originated text message based on the indicator in the mobile originated text message, from messages sent by the first user subsequently to the first user pre-setting the alphanumeric calling line identity, and for substituting the pre-set alphanumeric calling line identifier for the numeric calling line identifier of the first user in the selected text message to be delivered to the second user.

22. A method according to claim 21, wherein the alphanumeric calling line identifier is present on the basis of a received communication.

23. A method according to claim 22, wherein the received communication is a text message, a USED message or an interactive voice call.

24. A method according to claim 21, claim 22 or claim 23, wherein the first user is enabled to pre-set more than one alphanumeric calling line identifier, and to specify which alphanumeric calling line identifier is to be used on the basis of an indicator in a subsequent text message.

25. A method according to any one of claims 15 to 24, including storing, an association between a telephone number of the first user and a previously-selected alphanumeric calling line identifier of the first user and, on receipt of a selected text message addressed to the second user from the first user, to substitute the alphanumeric calling line identifier for the numeric calling line identifier of the first user in the text message delivered to the second user.

26. A method according to any one of claims 15 to 25, wherein the alphanumeric calling line identifier to be included is selectable by the message sender.

27. A method according to claim 26, wherein the alphanumeric calling line identifier to be included is carried by the indicator.

28. A method according to any one of claims 15 to 27, wherein a reply to a text message with an alphanumeric calling line identifier also carries an indicator.

29. A computer program having computer executable instructions, which when executed on a computer are operable to cause the computer to perform, all the steps of the method according to any one of claims 15 to 28.

30. A computer program product having a computer readable medium having recorded thereon information signals representative of the computer program according to claim 29.

## Patentansprüche

1. Telekommunikationsdienstevorrichtung zur Verwendung mit einem Telekommunikationsnetz, welches Textnachrichten unterstützt, wobei die Vorrichtung eine Erfassungseinrichtung (2) aufweist, die so betreibbar ist, daß sie in einer empfangenen, von einem Mobiltelefon stammenden Textnachricht von einem ersten Benutzer einen Anzeiger in wenigstens einem variablen Feld der von einem Mobiltelefon stammenden Textnachricht erfaßt, und Einrichtungen (2; 3; 6) aufweist, die so betreibbar sind, daß sie in Reaktion auf die Erfassung des Anzeigers durch die Erfassungseinrichtung eine numerische Anschlußkennung der von einem Mobiltelefon stammenden Textnachricht durch eine alphanumerische Anschlußkennung ersetzen, die durch den ersten Benutzer in der von einem Mobiltelefon stammenden Nachricht entsprechend der von einem Mobiltelefon stammenden Textnachricht, die an einen zweiten Benutzer übermittelt werden soll, spezifiziert wird.

2. Vorrichtung nach Anspruch 1, wobei der Anzeiger in einem Zielnummernfeld der empfangenen, von einem Mobiltelefon stammenden Textnachricht erfaßt wird.

3. Vorrichtung nach Anspruch 1 oder Anspruch 2, wobei der Anzeiger in einem Textkörperfeld in der empfangenen, von einem Mobiltelefon stammenden Textnachricht erfaßt wird.

4. Vorrichtung nach Anspruch 1, Anspruch 2 oder Anspruch 3, wobei wenigstens ein Teil des Anzeigers in mehr als einem variablen Feld erlaßt wird.

5. Vorrichtung nach einem der Ansprüche 1 bis 4, welche Einrichtungen (2, 3, 6) aufweist, die so betreibbar sind, daß sie eine von einem Mobiltelefon stammende Textnachrichtantwort von dem zweiten Benutzer empfangen, wobei die Zieladresse in der Textnachrichtantwort alphanumerisch ist, und die Textnachrichtantwort an den ersten Benutzer übermitteln.

6. Vorrichtung nach Anspruch 5, welche so betreibbar ist, daß sie das Versenden der Textnachrichtantwort mit einer alphanumerischen Anschlußkennung gestattet.

7. Vorrichtung nach einem der Ansprüche 1 bis 6, welche eine Voreinstellungseinrichtung aufweist, die so betreibbar ist, daß sie es dem ersten Benutzer ermöglicht, die alphanumerische Anschlußkennung so voreinzustellen, daß sie in einer ausgewählten anschließenden Textnachricht von dem ersten Benutzer, die an den zweiten Benutzer gerichtet ist, enthalten ist, und wobei die Einrichtungen (2; 3; 6) in Reaktion auf die Erfassung des Anzeigers eine Auswahleinrichtung aufweist, die so betreibbar ist, daß sie eine empfangene, von einem Mobiltelefon stammende Textnachricht auf Basis des Anzeigers in der von dem Mobiltelefon stammenden Textnachricht aus Nachrichten, die von dem ersten Benutzer im Anschluß an das Voreinstellen der alphanumerischen Anschlußkennung durch ihn gesendet wurden, auswählt und die voreingestellte alphanumerische Anschlußkennung gegen die numerische Anschlußkennung des ersten Benutzers in der ausgewählten Textnachricht, die an den zweiten Benutzer ausgeliefert werden soll, ersetzt.

8. Vorrichtung nach Anspruch 7, wobei die Voreinstellungseinrichtung so betreibbar ist, daß sie die alphanumerische Anschlußkennung auf Basis einer empfangenen Mitteilung voreinstellt.

9. Vorrichtung nach Anspruch 8, wobei die empfangene Mitteilung eine Textnachricht, eine USSD-Nachricht oder ein interaktiver Sprachanruf ist.

10. Vorrichtung nach Anspruch 7, Anspruch 8 oder Anspruch 9, wobei die Voreinstellungseinrichtung so konfiguriert ist, daß sie es dem ersten Benutzer gestattet, mehr als eine alphanumerische Anschlußkennung voreinzustellen und zu spezifizieren, welche alphanumerische Anschlußkennung verwendet werden soll, basierend auf einem Anzeiger in einer anschließenden Textnachricht.

11. Vorrichtung nach einem der Ansprüche 1 bis 10, welche eine Speichereinrichtung (6) aufweist, die so betreibbar ist, daß sie eine Verknüpfung zwischen einer Telefonnummer des ersten Benutzers und einer zuvor ausgewählten alphanumerischen Anschlußkennung des ersten Benutzers speichert und bei Empfang einer ausgewählten Textnachricht von dem ersten Benutzer, die an den zweiten Benutzer adressiert ist, die alphanumerische Anschlußkennung gegen die numerische Anschlußkennung des ersten Benutzers in der an den zweiten Benutzer ausgelieferten Textnachricht ersetzt.

12. Vorrichtung nach einem der Ansprüche 1 bis 11, wobei die alphanumerische CLI, die enthalten sein soll, von dem Absender der Nachricht ausgewählt werden kann.

13. Vorrichtung nach Anspruch 12, wobei die alphanumerische Anschlußkennung, die enthalten sein soll, von dem Anzeiger getragen wird.

14. Vorrichtung nach einem der Ansprüche 1 bis 13, wobei eine Antwort auf eine Textnachricht mit einer alphanumerischen Anschlußkennung ebenfalls einen Anzeiger trägt.

15. Telekommunikationsdiensteverfahren zur Verwendung mit einem Telekommunikationsnetz, welches Textnachrichten unterstützt, wobei das Verfahren umfaßt, daß in einer empfangenen, von einem Mobiltelefon stammenden Textnachricht von einem ersten Benutzer ein Anzeiger in wenigstens einem variablen Feld der von einem Mobiltelefon stammenden Textnachricht erfaßt wird und in Reaktion auf die Erfassung des Anzeigers eine numerische Anschlußkennung der von einem Mobiltelefon stammenden Textnachricht durch eine alphanumerische Anschlußkennung ersetzt wird, die von dem Benutzer in der von einem Mobiltelefon stammenden Textnachricht entsprechend der von einem Mobiltelefon stammenden Textnachricht, die an einen zweiten Benutzer ausgeliefert werden soll, spezifiziert wurde.

16. Verfahren nach Anspruch 15, wobei der Anzeiger in einem Zielnummernfeld der empfangenen, von einem Mobiltelefon stammenden Textnachricht erfaßt wird.

17. Verfahren nach Anspruch 15 oder Anspruch 16, wobei der Anzeiger in einem Nachrichtenkörperfeld der empfangenen, von einem Mobiltelefon stammenden Textnachricht erfaßt wird.

18. Verfahren nach Anspruch 15, Anspruch 16 oder Anspruch 17, wobei der Anzeiger in mehr als einem variablen Feld erfaßt wird.

19. Verfahren nach einem der Ansprüche 15 bis 18, welches das Empfangen einer von einem Mobiltelefon stammenden Textnachrichtantwort von dem zweiten Benutzer, wobei die Zieladresse in der Textnachrichtantwort alphanumerisch ist, und das Ausliefern der Textnachrichtantwort an den ersten Benutzer umfaßt.

20. Verfahren nach Anspruch 19, wobei die Textnachrichtantwort mit einer alphanumerischen Anschlußkennung versendet wird.

21. Verfahren nach einem der Ansprüche 15 bis 20, welches umfaßt, daß es dem ersten Benutzer gestattet wird, die alphanumerische Anschlußkennung, die in einer ausgewählten anschließenden Textnachricht von dem ersten Benutzer, die für den zweiten Benutzer gedacht ist, enthalten sein soll, vorauszuwählen, und daß eine empfangene, von einem Mobiltelefon stammende Textnachricht auf Basis des Anzeigers in der von einem Mobiltelefon stammenden Textnachricht unter Nachrichten ausgewählt wird, die von dem ersten Benutzer im Anschluß an das Voreinstellen der alphanumerischen Anschlußkennung durch ihn gesendet wurden, und daß die voreingestellte alphanumerische Anschlußkennung gegen die numerische Anschlußkennung des ersten Benutzers in der ausgewählten Textnachricht, die an den zweiten Benutzer ausgeliefert werden soll, ersetzt wird.

22. Verfahren nach Anspruch 21, wobei die alphanumerische Anschlußkennung auf Basis einer empfangenen Mitteilung vorliegt.

23. Verfahren nach Anspruch 22, wobei die empfangene Mitteilung eine Textnachricht, eine USSD-Nachricht oder ein interaktiver Sprachanruf ist.

24. Verfahren nach Anspruch 21, Anspruch 22 oder Anspruch 23, wobei es dem ersten Benutzer ermöglicht wird, mehr als eine alphanumerische Anschlußkennung auszuwählen und zu spezifizieren, welche alphanumerische Anschlußkennung verwendet werden soll, basierend auf einem Anzeiger in einer anschließenden Textnachricht.

25. Verfahren nach einem der Ansprüche 15 bis 24, welches das Speichern einer Verknüpfung zwischen einer Telefonnummer des ersten Benutzers und einer zuvor ausgewählten alphanumerischen Anschlußkennung des ersten Benutzers und bei Empfang einer ausgewählten, an den zweiten Benutzer gerichteten Textnachricht von dem ersten Benutzer das Ersetzen der alphanumerischen Anschlußkennung gegen die numerische Anschlußkennung des ersten Benutzers in der an den zweiten Benutzer ausgelieferten Textnachricht umfaßt.

26. Verfahren nach einem der Ansprüche 15 bis 25, wobei die alphanumerische Anschlußkennung, die enthalten sein soll, durch den Absender der Nachricht ausgewählt werden kann.

27. Verfahren nach Anspruch 26, wobei die alphanumerische Anschlußkennung, die enthalten sein soll, von dem Anzeiger getragen wird.

28. Verfahren nach einem der Ansprüche 15 bis 27, wobei eine Antwort auf eine Textnachricht mit einer alphanumerischen Anschlußkennung auch einen Anzeiger trägt.

29. Computerprogramm mit durch einen Computer ausführbaren Befehlen, die, wenn sie auf einem Computer ausgeführt werden, so betreibbar sind, daß sie den Computer dazu bringen, alle Schritte des Verfahrens nach einem der Ansprüche 15 bis 28 auszuführen.

30. Computerprogrammprodukt mit einem computerlesbaren Medium, auf dem Informationssignale aufgezeichnet sind, die für das Computerprogramm nach Anspruch 29 repräsentativ sind.

## Revendications

1. Appareil pour services de télécommunications destiné à être utilisé avec un réseau de télécommunications supportant une messagerie de textes, l'appareil comportant un moyen (2) de détection pouvant être mis en oeuvre pour détecter, dans un message de texte reçu d'un premier utilisateur, ayant pour origine un mobile, un indicateur dans au moins un champ variable du message de texte ayant pour origine un mobile, et un moyen (2 ; 3 ; 6) pouvant être mis en oeuvre pour remplacer, en réponse à la détection de l'indicateur par ledit moyen de détection, un identificateur de ligne appelante numérique du message de texte ayant pour origine un mobile par un identificateur de ligne appelante alphanumérique spécifié par le premier utilisateur dans le message arrivant à un mobile correspondant au message de texte d'origine mobile devant être délivré à un second utilisateur.

2. Appareil selon la revendication 1, dans lequel l'indicateur est détecté dans un champ de numéro de destination du message de texte d'origine mobile reçu.

3. Appareil selon la revendication 1 ou la revendication 2, dans lequel l'indicateur est détecté dans un champ de corps de message du message de texte d'origine mobile reçu.

4. Appareil selon la revendication 1, la revendication 2 ou la revendication 3, dans lequel au moins une partie de l'indicateur est détectée dans plus d'un champ variable.

5. Appareil selon l'une quelconque des revendications 1 à 4, comportant un moyen (2, 3, 6) pouvant être mis en oeuvre pour recevoir une réponse au message de texte d'origine mobile provenant du second utilisateur, dans lequel l'adresse de destination de la réponse au message de texte est alphanumérique, et pour délivrer la réponse au message de texte au premier utilisateur.

6. Appareil selon la revendication 5, pouvant être mis en oeuvre pour permettre à la réponse au message de texte d'être envoyée avec un identificateur de ligne appelante alphanumérique.

7. Appareil selon l'une quelconque des revendications 1 à 6, comportant un moyen de pré-établissement pouvant être mis en oeuvre pour permettre au premier utilisateur de préétablir l'identificateur de ligne appelante alphanumérique devant être inclus dans un message de texte subséquent sélectionné depuis le premier utilisateur adressé au second utilisateur, et dans lequel le moyen (2 ; 3 ; 6) réagissant à une détection de l'indicateur comporte un moyen de sélection pouvant être mis en oeuvre pour sélectionner un message de texte d'origine mobile reçu sur la base de l'indicateur dans le message de texte d'origine mobile à partir de messages envoyés par le premier utilisateur subséquemment au pré-établissement par le premier utilisateur de l'identité de la ligne appelante alphanumérique, et pour substituer l'identificateur de la ligne appelante alphanumérique préétabli à l'identificateur de la ligne appelante numérique du premier utilisateur dans le message de texte sélectionné devant être délivré au second utilisateur.

8. Appareil selon la revendication 7, dans lequel le moyen de pré-établissement peut être mis en oeuvre pour préétablir l'identificateur de ligne appelante alphanumérique sur la base d'une communication reçue.

9. Appareil selon la revendication 8, dans lequel la communication reçue est un message de texte, un message USSD ou un appel vocal interactif.

10. Appareil selon la revendication 7, la revendication 8 ou la revendication 9, dans lequel le moyen de pré-établissement est configuré pour permettre au premier utilisateur de préétablir plus d'un identificateur de ligne appelante alphanumérique, et pour spécifier quel identificateur de ligne appelante alphanumérique doit être utilisé sur la base d'un indicateur d'un message de texte subséquent.

11. Appareil selon l'une quelconque des revendications 1 à 10, comportant un moyen de stockage (6) pouvant être mis en oeuvre pour stocker une association entre un numéro de téléphone du premier utilisateur et un identificateur de ligne appelante alphanumérique précédemment sélectionné du premier utilisateur et, à la réception d'un message de texte sélectionné adressé du premier utilisateur au second utilisateur, pour substituer l'identificateur de ligne appelante alphanumérique à l'identificateur de ligne appelante numérique du premier utilisateur dans le message de texte délivré au second utilisateur.

12. Appareil selon l'une quelconque des revendications 1 à 11, dans lequel l'identificateur de ligne appelante alphanumérique devant être inclus peut être sélectionné par l'émetteur du message.

13. Appareil selon la revendication 12, dans lequel l'identificateur de ligne appelante alphanumérique devant être inclus est porté par l'indicateur.

14. Appareil selon l'une quelconque des revendications 1 à 13, dans lequel une réponse à un message de texte avec un identificateur de ligne appelante alphanumérique porte aussi un indicateur.

15. Procédé pour services de télécommunications destiné à être utilisé avec un réseau de télécommunications supportant une messagerie de textes, le procédé comprenant la détection, dans un message de texte d'origine mobile reçu d'un premier utilisateur, d'un indicateur dans au moins un champ variable du message de texte d'origine mobile et, en réponse à la détection de l'indicateur, le remplacement d'un identificateur de ligne appelante numérique du message de texte d'origine mobile par un identificateur de ligne appelante alphanumérique spécifié par l'utilisateur dans le message arrivant à un mobile correspondant au message de texte d'origine mobile devant être délivré à un second utilisateur.

16. Procédé selon la revendication 15, dans lequel l'indicateur est détecté dans un champ de numéro de destination du message de texte d'origine mobile reçu.

17. Procédé selon la revendication 15 ou la revendication 16, dans lequel l'indicateur est détecté dans un champ de corps de message du message de texte d'origine mobile reçu.

18. Procédé selon la revendication 15, la revendication 16 ou la revendication 17, dans lequel l'indicateur est détecté dans plus d'un champ variable.

19. Procédé selon l'une quelconque des revendications 15 à 18, comprenant la réception d'une réponse au message de texte d'origine mobile en provenance du second utilisateur, dans lequel l'adresse de destination dans la réponse au message de texte est alphanumérique, et la délivrance de la réponse au message de texte au premier utilisateur.

20. Procédé selon la revendication 19, dans lequel la réponse au message de texte est envoyée avec un identificateur de ligne appelante alphanumérique.

21. Procédé selon l'une quelconque des revendications 15 à 20, comprenant le fait de permettre au premier utilisateur de préétablir l'identificateur de ligne appelante alphanumérique devant être inclus dans un message de texte subséquent sélectionné depuis le premier utilisateur, prévu pour le second utilisateur, et la sélection d'un message de texte d'origine mobile reçu sur la base de l'indicateur dans le message de texte d'origine mobile, à partir de messages envoyés par le premier utilisateur subséquemment au pré-établissement par le premier utilisateur de l'identité de la ligne appelante alphanumérique, et à substituer l'identificateur de ligne appelante alphanumérique préétabli à l'identificateur de ligne appelante numérique du premier utilisateur dans le message de texte sélectionné devant être délivré au second utilisateur.

22. Procédé selon la revendication 21, dans lequel l'identificateur de ligne appelante alphanumérique est présent sur la base d'une communication reçue.

23. Procédé selon la revendication 22, dans lequel la communication reçue est un message de texte, un message USSD ou un appel vocal interactif.

24. Procédé selon la revendication 21, la revendication 22 ou la revendication 23, dans lequel le premier utilisateur est autorisé à préétablir plus d'un identificateur de ligne appelante alphanumérique, et à spécifier quel identificateur de ligne appelante alphanumérique doit être utilisé sur la base d'un indicateur dans un message de texte subséquent.

25. Procédé selon l'une quelconque des revendications 15 à 24, comprenant le stockage d'une association entre un numéro de téléphone du premier utilisateur et un identificateur de ligne appelante alphanumérique précédemment sélectionné du premier utilisateur et, à la réception d'un message de texte sélectionné adressé du premier utilisateur au second utilisateur, la substitution de l'identificateur de ligne appelante alphanumérique à l'identificateur de ligne appelante numérique du premier utilisateur dans le message de texte délivré au second utilisateur.

26. Procédé selon l'une quelconque des revendications 15 à 25, dans lequel l'identificateur de ligne appelante alphanumérique devant être inclus peut être sélectionné par l'émetteur du message.

27. Procédé selon la revendication 26, dans lequel l'identificateur de ligne appelante alphanumérique devant être inclus est porté par l'indicateur.

28. Procédé selon l'une quelconque des revendications 15 à 27, dans lequel une réponse à un message de texte avec un identificateur de ligne appelante alphanumérique porte aussi un indicateur.

29. Programme d'ordinateur ayant des instructions exécutables par un ordinateur, qui, lorsqu'elles sont exécutées sur un ordinateur, peuvent être mises en oeuvre pour amener l'ordinateur à réaliser la totalité des étapes du procédé selon l'une quelconque des revendications 15 à 28.

30. Produit à programme d'ordinateur ayant un support lisible par ordinateur sur lequel sont enregistrés des signaux d'information représentatifs du programme d'ordinateur selon la revendication 29.
